# EUROPEAN PATENT APPLICATION

(11) **EP 4 388 878 A1**
(43) Date of publication of application: **26.06.2024**
(21) Application number: 23218797.1
(22) Date of filing: 20.12.2023
(51) Int. Cl.: A01N 65/08, A01P 21/00

(54) **A COMPOSITION FOR PROVIDING DROUGHT TOLERANCE IN PLANTS**

(30) Priority: 23.12.2022 NL 2033823
(71) Applicant: Landlab srl Società Benefit, 36050 Vicenza Quinto Vicentino (IT)
(72) Inventor: Altissimo, Adriano, 36050 Quinto Vicentino - Vicenza (IT); Sudiro, Cristina, 36050 Quinto Vicentino - Vicenza (IT); Bressan, Mauro, 36050 Quinto Vicentino - Vicenza (IT)
(74) Representative: Arnold & Siedsma

(57) **Abstract**

The present invention relates to a composition for providing drought tolerance in a plant, comprising an organic carrier material, and plant tissue, and wherein the composition is comprised of micro granules. The present invention further relates to a method for improving sub-comfort conditions of a plant, such as drought tolerance, using the composition, and a method for preparation of plant tissue for use in the composition.

## Description

The present invention relates to a composition for providing drought tolerance in a plant, comprising an organic carrier material, and plant tissue, and wherein the composition is comprised of microgranules. The present invention further relates to a method for improving sub-comfort conditions of a plant, such as drought tolerance, using the composition, and a method for preparation of plant tissue for use in the composition.

The expanding world population demands improvement in crops yield. The understanding that additives such as nitrogen and phosphate improve each hectare of soil developed into an increasingly intensified use of chemical products on land. Consequently, an agricultural industry around synthetically created fertilizers developed in the last decennia that is able to keep up with the growing number of people. Agriculture has become considerably more efficient, improving production systems, enhancing crop efficiency and disease resistance that has resulted in significant increases in food production, but on the other hand is highly resource intensive, even fully depleting resources locally with increasing damage to flora and fauna worldwide, decline in soil quality, water scarcity, salinity, and loss of biodiversity.

Irrigation and water usage in the industrial agriculture is 2/3 of world's total usage, which is estimated to increase by 30% in the following decade. Increasing water demand, extreme temperatures, soil salinization, are responsible for the more frequently observed drought outbreaks worldwide leading to an estimated average crop yield loss of over 50% for most of major crops. Therefore, besides the need for organic products, there is a need in the art for agricultural products that increase stress tolerance, such as drought stress, in plants.

Although the addition of more and more phosphorus and nitrogen through the use of fertilizers appeared a solution to improve crop yield, its use and the negative effects on public health and environmental increased, especially in relation to long-term negative effects. Moreover, adding more of the fertilizers do not always lead to a higher uptake, instead resulting in nitrogen and phosphorous build-ups in the soil and flushed away to nearby waters by irrigation. Also, the overfertilization of soil resulted in a reduction of microbes and consequently to an imbalanced enzymatic activity because the populations of soil organisms that collaborate in the degradation of organic matter was affected. Restoring the composition of microbes will restore the soil. Therefore, the need for more organic and biological enhancers capable of improving the uptake of compounds and improve crop yield, without the need for continues fertilization is essential to reduce the above negative effects.

Considering the above, there is a need in the art for organic and biological products that induce higher stress tolerance, particularly drought tolerance in plants, provide improved nutrition uptake in plants, reduce fertilizer spoilage and usage, and/or restore imbalanced soil- microorganisms. There is a need for plant efficiency enhancement products that enable agriculture to become more profitable due to improved crop quality and higher yields and to preserve soil quality.

It is the object of the present invention, among other objects, to address the above need in the art. The object of present invention, amongst other objects, is met by the present invention as outlined in the appended claims.

Specially, the above object, among other objects, is met, according to a first aspect, by a composition for providing drought tolerance in a plant, comprising
between 30 wt% to 85 wt%, more preferably between 35 wt% to 80 wt%, even more preferably between 40 wt% to 75 wt% of an organic carrier material, based on the total weight of the composition, comprised of organic side stream residuals comprising a protein content of 5 wt% to 50 wt%, more preferably between 10 wt% to 40 wt%, most preferably between 20 wt% to 30 wt%, based on the weight of the residual side stream,
between 1 wt% to 30 wt%, more preferably between 1.5 wt% to 25 wt%, even more preferably between 1 wt% to 20 wt% of a plant tissue, based on the total weight of the composition, wherein the plant tissue is one or more selected from the group consisting of *Vitis vinifera, Opuntia ficus indica, Ribes nigrum, Medicago sativa, Salvia Rosmarinus, Eucalyptus spp., Lentiscus pistacia, Castanea spp., Thymbra capitata, Thymus spp., Salix spp., Sinapis spp., Humulus lupulus* and *Zingiber officinale* preferably *Vitis vinifera, Ribes nigrum* and/or *Opuntia ficus indica,* wherein the composition is comprised of microgranules having a particle size of 0.1 to 3 mm, more preferably 0.15 to 2.5 mm, most preferably 0.2 to 2 mm in diameter.

Experiments show that the composition of the present invention is suitable for improved agriculture for tomato, wheat, corn, sorghum, lettuce, forage, and marigold in drought during early life stages. The composition of present invention enables those crops to withstand sub comfort conditions such as drought by improving water use efficiency, and thus increasing uptake of nutrients and water. The composition of present invention results in improved germination and an increased fresh biomass. The composition of present invention improves the plants drought tolerance during germination. When plants are exposed to drought or other extreme abiotic conditions, the plant produces an oxidative stress response that leads to the excessive production and accumulation of reactive oxygen species (ROS) that harms the plant. The composition plant tissue and plant extract comprise antioxidants, a group of compounds that decoys and disarms ROS. The tolerance to abiotic stress not only depends on duration and severity of the drought period, it depends also on the available antioxidants present in the plant. Moreover, drought results in oxidative damage, e.g., overproduction of reactive oxygen species, if antioxidants are not available to capture away the toxic oxygen species. Comprising present invention of antioxidants therefore reduces stress in the crops.

The composition of present invention comprises an organic carrier material to carry said antioxidants and other active compounds. The organic carrier comprises the organic side stream residuals that contain a high protein content. The organic carrier is easily broken down, its proteins useful for composting and development of healthy soil.

According to a preferred embodiment, the composition further comprises 5 wt% to 40 wt%, preferably between 10 wt% to 35 wt%, more preferably between 25 wt% to 30 % of a wetting agent and/or superabsorbent, based on the total weight of the composition. The wetting agent decreases the surface tension improving water distribution in the soil and thus water and nutrient uptake in the roots. Superabsorbents withdraw water towards the roots, reducing water loss, and maximizing water uptake from the soil.

According to another preferred embodiment, the present invention relates to the composition, wherein the wetting agent is selected from the group consisting of PBS, Acquaid, Symbio incision, Hydroaid plus, Hydravance 200, Symbio yucca preferably PBS.

According to a preferred embodiment, the present invention relates to the composition, wherein the absorbent is selected from the group consisting of corn starch, Idrovgea, Swellgel, and zeolite, preferably corn starch.

According to a preferred embodiment, the composition further comprises 0.1 wt% to 10 wt%, more preferably between 0.5 wt% to 8 wt%, even more preferably 1 wt% to 6 wt%, most preferably 1.5 wt% to 4 wt% of a bio-stimulant, based on the total weight of the composition.

According to another preferred embodiment, the invention relates to the composition comprising the bio-stimulant, wherein the bio-stimulant is selected from the group consisting of the Plant Growth Promoting Microorganism (PGPM), polyphenol, 5-ALA, plant extract, sildenafil citrate and melatonin, preferably PGPM and the polyphenol. Bio-stimulants positively influence the growth and resistance of plants, resulting a higher abiotic stress tolerance.

According to a preferred embodiment, the present invention relates to the composition comprising the PGPM, wherein PGPM is one or more microbe(s) belonging to bacteria, archaea and/or fungi, comprising *Acinetobacter spp.,* preferably *Acinetobacter rhizosphaerae, Pseudomonas spp.,* preferably *Pseudomonas putida, Bacillus spp.,* preferably *Bacillus megaterium* or *Bacillus simplex, Chryseobacterium spp., Trichoderma spp Pantoea spp., Methylobacterium ssp., Azotobacter spp., Azospirillum spp., Streptomyces spp., Rhizobium spp., Glomus spp. and Lactobacillus spp.,* preferably *Acinetobacter rhizosphaerae., Pseudomonas putida, Bacillus megaterium* and/or *Bacillus simplex.* These free-living microorganisms actively colonize the plant root to fix nitrogen, solubilization of soil minerals and phosphor, restore the imbalanced local microbe to improve nutrient uptake, reduce overfertilization of soil and facilitate the production of siderophores and enhance iron update.

According to yet another preferred embodiment, the present invention relates to the composition wherein the bio-stimulant is polyphenol, wherein the polyphenol is selected from the group consisting of pro-anthocyanidines, tannin, catechin, epicatechin, flavonoids, betalains and anthocyanins. The class of pro-anthocyanidin, also known as chemical oligomere pro-anthocyanidine, comprise oligomers of catechin, flavan-3-ols, epicatechin, anthocyanins gallic acid esters, tannins, pseudo-tannins, condensed tannings and tannins that protect the plant against ROS. In addition, polyphenols promote plant growth as a phyto-stimulator, influencing the phytohormones metabolism by enhancing balance of plant hormone auxin, cytokinins, abscisic acid, gibberellins production, and ethylene.

According to a preferred embodiment, the present invention relates to plant tissue, wherein the plant tissue is from a plant part selected from the group consisting of leaf, root, seed and flower, preferably seed. Seeds are a promising and sustainable source of ingredients with naturally bioencapsulated nutrients.

According to another preferred embodiment, the present invention relates to the composition wherein the organic side stream residuals originate from legumes, oilseed meals, dry seeds and/or cereals. The organic side stream residuals are high in protein content (at least 10wt%), balance high soil pH and replace depleted trace minerals in the soil and is ecofriendly. Breakdown of proteins in the soil is crucial for composting and development of soil.

According to yet another preferred embodiment, the present invention relates to the composition wherein the legumes originate from one or more plant(s) selected from the group consisting of *Glycine max* (soybean), *Lens* spp. (lentils), *Cicer arietinum* (chickpeas), *Phaseolus* spp. (beans), *Pisum sativum* (pea), *Vicia, faba* (broad bean), *Arachis hypogaea* (peanut) and *Lupinus* spp. (lupini beans), preferably soybeans, lentils, and chickpeas. Legume refers to a fruit of a plant, wherein the fruit is a dry fruit. Legumes are a significant source of protein with a protein content of around 10 to 50 wt%.

According to a preferred embodiment, the present invention relates to the composition wherein the oilseed meals and/or the dry seeds, both originating from one or more plant(s) selected from the group consisting of *Brassica* spp., preferably *Brassica napus* (rape), *Helianthus annuus* (sunflower), *Glycine max* (soybean) and *Gossypium* spp. (cotton), preferably rape and sunflower. Meals (called canola meal when derived from rape), are a by-product of an extraction of oil from seeds and are conventionally used as protein supplement for beef cattle.

According to a preferred embodiment, the present invention relates to the composition wherein the cereals originating from one or more plant(s) selected from the group consisting of *Triticum* spp. (wheat), *Zea mays* (maize), *Avena sativa* (oat), *Oryza sativa* (rice), *Hordeum vulgare* (barley) *Secale cereale* (rey), Panicodae (millet), *Chenopodium quinoa* (quinoa) *Sorghum bicolor* (sorghum), preferably *Triticum* spp. (wheat), *Zea mays* (maize), *Avena sativa* (oat). Cereals are easily compostable by microbes in the soil and provide the plant of nutrients.

According to yet another preferred embodiment, the present invention relates to the composition wherein the composition is free of chemical fertilizer composition. Adding nutrition to the soil, may lead to adverse effects described earlier. To reduce the negative effect of fertilization the composition of present invention is free from chemical fertilizer composition. Chemical fertilizers are synthetically produced chemicals which include synthetic nitrogen, phosphorus, and potassium often leading to a chemical runoff from said haphazardly fertilizers. Present invention is free from those possible pollutants.

The present invention, according to a second aspect, relates to a method for improving sub-comfort conditions of a plant, wherein the method comprises the step of applying a composition according to the first aspect of the invention, to a root of the plant or soil above said root.

According to a preferred embodiment, the present invention relates to the method wherein the composition is applied during sowing, transplanting or during plant cultivation.

According to another preferred embodiment, the present invention relates to the method wherein the plant is a seed, a sprout or a youngling. In contrast to the use of fertilizers, the composition of present invention is safe for young and fragile plants.

According to another preferred embodiment, the present invention relates to the method wherein the plant is one or more agricultural crop selected from tomato, corn, sorghum, lettuce, forage, marigold and wheat.

According to another preferred embodiment, the present invention relates to the method, wherein the composition is applied between 110 kg/ha to 80 kg/ha, preferably between 20 kg/ha to 70 kg/ha, more preferably 30 kg/ha to 60 kg/ha, most preferably between 40 kg/ha to 50 kg/ha.

According to another preferred embodiment, the present invention relates to a method, wherein the composition is applied to the plant at least one time per life cycle, preferably at least two times per life cycle, more preferably at least three times per life cycle.

According to another preferred embodiment, the present invention relates to a method, wherein said sub-comfort conditions are one or more selected from the group consisting of drought stress, plant nutrient deficiencies, nitrogen shortage, phosphorus shortage and salinity, preferably drought stress.

The present invention, according to a third aspect, relates to a method for preparation of a plant tissue for use in a composition, comprising the steps of
a) selecting the plant tissue from a plant part highest in concentration in one or more polyphenol(s), wherein the plant is one or more selected from the group consisting of *Vitis vinifera, Opuntia ficus indica, Ribes nigrum, Medicago sativa, Salvia Rosmarinus, Eucalyptus spp., Lentiscus pistacia, Castanea spp., Thymbra capitata, Thymus spp., Salix spp., Sinapis spp., Humulus lupulus* and *Zingiber officinale* preferably *Vitis vinifera, Ribes nigrum* and *Opuntia ficus indica;*
b) cutting the plant parts into sections between 0.5 to 5 cm², more preferably between 0.5 to 3 cm², most preferably between 1 to 2 cm²;
c) drying the plant tissue at room temperature in an atmosphere with circulating air with high nitrogen and low oxygen, between 78% to 99% nitrogen and between 1% to 21% oxygen, more preferably between 80 to 99 % nitrogen and between 15% to 1% oxygen, most preferably between 85% to 99% nitrogen and between 78% to 99% nitrogen and between 1% to 10% oxygen; wherein step c results in the optimal preservation of active ingredients and metabolites in said plant tissue;
d) sterilizing the plant tissue;
e) obtainment of the plant tissue for use in the composition.

According to another embodiment, the present invention relates to the method, wherein the plant parts are seeds and/or leaves.

According to another embodiment, the present invention relates to the method, wherein the one or more polyphenols is selected from the group consisting of pro-anthocyanidines, tannin, catechin, epicatechin, flavonoids, betalains and anthocyanins.

According to yet another embodiment, the present invention relates to the method, wherein the method further comprises the step of obtainment of plant extract, wherein plant tissue of step c is contained within a solvent, wherein the solvent is, water, an alcohol or acetone. The solvent extracts the polyphenols and (bio-)active ingredients from the plant tissue providing plant (tissue) extract for use in the composition of present invention. The plant extract may be used in addition (or in stead of) the plant tissue in the composition of present invention.

According to yet another embodiment, the present invention relates to the method, wherein sterilization of plant tissue is performed by LED-UV radiation or ozone fumigation.

The present invention, according to a further aspect, relates to a use of composition as described herein for increasing the drought tolerance of a plant.

The present invention will be further detailed in the following examples wherein:

### Examples

The effect of the composition of the present invention on seed germination, biomass increase and drought stress on several plant species, including tomato, corn, sorghum, lettuce is examined. In Table 1 embodiments of the composition of present invention included in the examples below, are listed. Untreated control is abbreviated as 'UTC' full water treatment as 'FW' and drought stress as 'DS'.

**Table 1. List of tested compositions, including embodiments present invention**

| Name | Kg/ha | Embodiment |
|---|---|---|
| UTC 0 FW | - | Untreated |
| UTC 0 DS | - | Untreated |
| mRHI 0 FW | 45,0 | Organic carrier (100%) |
| mRHI 0 DS | 45,0 | Organic carrier (100%) |
| mRHI 1 DS | 64,9 | Organic carrier (77,09%) + *Vitis vinifera* (4,41%) + PBS (18,5%) |
| mRHI 2 DS | 64,9 | Organic carrier (77,09%) + *Vitis vinifera* (4,41%) + *Ribus nigrum* (18,35%) |
| mRHI 5 DS | 50,7 | Organic carrier (88,72%) + *Vitis vinifera* (11,28%) |
| mRHI 6 DS | 50,0 | Organic carrier (90,00%) + *Opuntia ficus-indica* (10,00%) + |
| mRHI 9 DS | 64,2 | Organic carrier (70,09%) + *Opuntia ficus-indica* (3,89%) + Idrovgea (26,01%) |
| mRHI 10 DS | 55,7 | Organic carrier (80,76%) + *Vitis vinifera* (10,27) + *Opuntia ficus-indica* (8,97%) |
| mRHI 11 DS | 72,4 | Organic carrier (62,14%) + *Vitis vinifera* (7,90%) + *Opuntia ficus-indica* (6,90%) + Idrovgea (23,06%) |
| mRHI 13 DS | 57,7 | Organic carrier (77,96%) + *Vitis vinifera* (9,91) + Symbio Incision (12,13%) |
| mRHI 14 DS | 57,0 | Organic carrier (78,95%) + *Opuntia ficus-indica* (8,77%) + Symbio Incision (12.28%) |
| mRHI 15 DS | 62,7 | Legume blend (71,25%) + *Vitis vinifera* (9,12%) + *Opuntia ficus-indica* (7,97%) + Symbio Incision (11,16%) |
| MRHI 17 DS | 52,9 | Organic carrier (88,72%) + *Vitis vinifera* (11,28%) + *Acinetobacter rhizosphaerae* (2,17%) |
| MRHI 18 DS | 52,9 | Organic carrier (88,72%) + *Vitis vinifera* (11,28%) + *Pseudomonas putida* (2,17%) |
| MRHI 19 DS | 52,2 | Organic carrier (90,00%) + *Opuntia ficus-indica* (10,00%) + *Bacillus megaterium* (2,17%) |
| MRHI 20 DS | 52,2 | Organic carrier (90,00%) + *Opuntia ficus-indica* (10,00%) + *Bacillus simplex* (2,17%) |

### Example 1: Improved drought stress in tomato plants

Experiments on tomato plants have been conducted where the plants were tested under drought stress inducing conditions in the absence or presence of the composition of present invention. The effect of the composition of present invention on the tomato plant is monitored by observing the wilting effect. Wilting is the loss of rigidity of non-woody parts of plants and often occurs during drought conditions as the result of reduction of the turgor pressure in non-lignified plant cells, because of diminished water in the cells. The process of wilting modifies the leaf angle distribution of the plant (or canopy) towards more erectophile conditions and consequently decreases leaf area (in cm²) of the plant. By observing differences in the wiling of plants and measuring leaf area, the drought tolerance is assessed.

Tomato seeds were sown in peat moss enriched in nutrients (1 g nitrogen/L of substrate). The seedlings were grown to a 3 to 4 leaf's stage before transplantation to 80 g pots. Plants were treated with the composition of present invention, by applying the amount of product reported in table 2 at the roots of the plants. Multiple embodiments of present invention were tested on tomato plants, see table 1. The controls in this experiment included plants treated with a carrier, comprising solely the organic side stream residuals. The controls were either negative under drought stress (DS) or positive, those that did not suffer from drought stress and were fully watered (FW). Both mRHI 1 and 2 include seed extract from *Vitis vinifera,* and PBS or *Ribus nigrum* respectively.

**Table 2. Dosage/plant**

| Treatment | Dosage (g/plant) |
|---|---|
| mRHI 0 FW | 1,42 |
| mRHI 0 DS | 1,42 |
| mRHI 1 DS | 1,50 |
| mRHI 2 DS | 1,62 |

To induce drought, irrigation was intermitted for a 7 day period. The first wilting measurement was performed on the fourth day (see Table 3) and continued for about 4 further days.

Wilting is scored visually according to the following index: 1 = almost dead plant all leaves have severely wilted and color of all leaves is light green to yellow, bare ground is fully visible, the plant is almost physiologically dead; 2 = strong wilting, all leaves are wilted, and some leaves start to change color due to chlorophyll degradation, bare ground is prominently visible, some leaves have dried and crisped up; 3 = medium wilting, wilting and drooping shows up on all leaves of the plant, low-moisture effect on older leaves is more prominent; 4 = light wilting, some terminal and newer leaf fold-up, but overall the plant looks healthy and 5 = no wilting or leaf drooping symptoms. At the fourth and last day of measurement, the leaf area was measured.

**Table 3. Wilting of Tomato; Fresh biomass in % yield increase and fresh biomass of tomato**

| Treatment | Visual wiling day 1 | Visual wilting day 2 | Visual wilting day 3 | Visual wilting day 4 | Leaf area (cm2) |
|---|---|---|---|---|---|
| mRHI 0 FW | 5 | 5.00 | 5.00 | 5.00 | 567.96 |
| mRHI 0 DS | 5 | 4.72 | 3.91 | 3.37 | 182.39 |
| mRHI 1 DS | 5 | 4.87 | 4.46 | 4.01 | 259.56 |
| mRHI 2 DS | 5 | 4.97 | 4.93 | 4.40 | 284.05 |

Control plants that were not treated with the composition of present invention showed an average wilting score of about 3 and a leaf area of 182.39 cm2. The plants treated with composition mRHI1 had an average wilting score of about 4 and a leaf area of 259.56 cm2. mRHI2 treatment resulted in an average wilting score of about 4.5 and a leaf area of 284.05. Results indicate that plants that received the composition according to present invention significantly improves the plants drought tolerance in comparison to the tomato plants that did not receive the composition of present invention.

Furthermore, preliminary experiments shown that the compositions mRHI 17 to mRHI 20 were effective in improved drought stress in tomato plants (data not shown).

### Example 2: Drought tolerance in Wheat and Panico

In a second experiment, the effect of the composition of the present invention during drought was examined on seed germination. Seed germination is expressed in percentage of successful germination of the seed compared to UTC (untreated control) for a specified time period. Drought tolerance during seed germination is crucial for optimal crop yield not only because seedlings are more vulnerable and otherwise less likely to sprout, but also in view of the off-timing of germination that affects later developmental stages in the plant life.

Three rows of twelve wheat seeds were sown in a 3-liter LS73 substrate (70% sand and 30% soil). Plants were treated with the composition of present invention, by applying the amount of product reported on table 4 under seeds row.

**Table 4. Dosage/plant**

| Treatment | g/pot |
|---|---|
| UTC DS | - |
| mRHI 0_DS | 0,10125 |
| mRHI 5 | 0,11412 |
| mRHI 6 | 0,1125 |
| mRHI 10 | 0,12537 |
| mRHI 11 | 0,162945 |
| mRHI 14 | 0,1125 |

After sowing the seeds, drought stress was introduced by a reduction of the water availability by 90% compared to positive control. The germination percentage was calculated (table 5, column 2 and 3) for a period of 4 days and of 7 days.

MHRI 6 was included as a composition according to the present invention and tested on wheat seeds. The experiment also included seeds that did not receive the composition of present invention (mRHI 0) and served as the negative control, one group under drought stress and one group that did not suffer from drought stress. MHRI 0 only comprises an organic carrier (without the defined plant extract). mRHI 6, 10 and 14 are furthermore comprised of plant extract from *Opuntiaficus-indica.* mRHI 10 and 11 are comprised of plant extract of *Vitis vinifera.*

Germination is monitored and the percentage of successful germinating was determined in comparison to the negative control (Table 5). Most seeds germinated when treated with mRHI 6, wherein a significant increase of 11.3% of total germinated seeds was observed, and even a 17% (11.3% + 5.7%) increase in view of seeds under drought stress and absent of the composition of present invention. MRHI 14 especially had a positive effect on germination after 7 days.

**Table 5. Germination rate in wheat**

| Treatment | 4d % increase germination vs UTC DS | 7d % increase germination vs UTC DS | Fresh Biomass (g/plant) |
|---|---|---|---|
| UTC DS | - | - | 0.40 |
| mRHI 0 DS | -5.70% | -5.70% | 0.23 |
| mRHI 6 DS | 11.30% | 11.30% | 0.31 |
| mRHI 10 DS | 1.40% | 6.10% | 0.25 |
| mRHI 11 DS | -1.90% | 0.00% | 0.32 |
| mRHI 14 DS | -3.30% | 6.10% | 0.35 |

### Drought tolerance of another grass species: Panico.

Three rows of fifteen panico seeds were sown in a 3-liter with LS73 substrate (70% sand and 30% soil). Plants were treated with the composition of present invention, by applying the amount of product reported on table 6 under seeds row. After sowing the seeds, drought stress was introduced by a reduction of the water availability by 90% compared to positive control until the end of germination stage, then plants under drought condition were maintained at 0,4 FC (field capacity while full water entries at 0,85.

**Table 6. Dosage/plant**

| Treatment | Dosage g mRHI/pot |
|---|---|
| UTC FW | - |
| mRHI 0 FW | 0,1013 |
| UTC DS | - |
| mRHI 0_DS | 0,1013 |
| mRHI 6 | 0,1125 |
| mRHI 9 | 0,1445 |
| mRHI 11 | 0,1629 |
| mRHI 13 | 0,1141 |
| mRHI 14 | 0,1125 |

Panico, was measured in fresh biomass (g) for the following compositions: 6, 9, 11, 13, 14 mRHI. MRHI 6, 9, and 14 are comprised of plant extract from *Opuntia ficus-indica.* mRHI 6 and 11 are comprised of plant extract of *Vitis vinifera.* All compositions of present invention have a positive effect on an enhanced drought tolerance of Panico (Table 7).

**Table 7. Fresh biomass in Panico**

| **Treatment** | **FB/row (g)** |
|---|---|
| UTC FW | 4.82 |
| UTC DS | 1.6 |
| mRHI 0 FW | 5.16 |
| mRHI 0 DS | 2.06 |
| mRHI 6 | 2.43 |
| mRHI 9 | 2.11 |
| mRHI 11 | 2.21 |
| mRHI 13 | 2.29 |
| mRHI 14 | 2.52 |

### Example 3: Drought stress in Corn plants

Next, the effect of the composition of present invention in view of drought stress in corn plants was examined. Plant height, absolute fresh biomass (FB), and relative biomass were monitored upon induced drought stress, treated with and without the composition of present invention.

Two corn seeds were sown in a 3-literwith LS73 substrate (70% sand and 30% soil). Plants were treated with the composition of present invention, by applying the amount of product reported on table 6 under seeds row. Drought stress was introduced by reducing the water availability for 90% compared to the positive control. Once both plants emerged, plants under drought condition were maintained at 0,4 FC (field capacity while full water entries at 0,85).

**Table 8. Dosage/plant**

| Treatment | Dosage (g/pot) |
|---|---|
| UTC FW | - |
| mRHI 0 FW | 0,6000 |
| UTC DS | - |
| mRHI 0_DS | 0,6000 |
| mRHI 5 DS | 0,6763 |
| mRHI 6 DS | 0,6667 |
| mRHI 11 DS | 0,9656 |
| mRHI 13 DS | 0,6763 |
| mRHI 14 DS | 0,6667 |

Multiple embodiments of the composition (mRHI 5, 6, 11, 13, and 14) of present invention were tested on corn plants. The experiment included a group treated with the positive control (mRHI 0), one group under drought stress (DS) and one group that did not suffer from drought stress and was fully watered (FW). MHRI 0 is comprised of an organic carrier, without the plant tissue.

Germination was tested for mRHI 5, 6, 11, 13, and 14 of which mRHI 5, 11 and 14 strongly increased the germination rate under drought condition, in comparison to the controls (see Table 9).

**Table 9. Germination in Corn**

| *Treatment* | *Germination day 1* | *Germination day 4* |
|---|---|---|
| *mRHI 0 FW* | 2 | 2 |
| *mRHI 0 DS* | 0.33 | 1.5 |
| *mRHI 5 DS* | 0.17 | 2 |
| *mRHI 6 DS* | 0.17 | 1.67 |
| *mRHI 11 DS* | 0.29 | 2 |
| *mRHI 13 DS* | 0.38 | 1.88 |
| *mRHI 14 DS* | 0 | 2 |

The experiment was repeated following the same protocol reported above. The height and The Fresh Biomass of shoot was measured for the embodiments mRHI 11, 13 and 14. Treatment with mRHI 13 under drought conditions provided a significant increase in plant height, exceeding the positive control (See Table 10). Both mRHI 13 and 14 showed the highest plant biomass up to +15% under drought stress conditions. Overall, these results show an improved biomass increase of the plants treated with the composition of present invention compared to the untreated plants in drought stressed conditions.

**Table 10. Fresh biomass and height in Corn**

| **Treatment** | **FB shoot (g)** | **Height** |
|---|---|---|
| UTC FW | 69.56 | 90.13 |
| UTC DS | 89.75 | 47.37 |
| mRHI 0 FW | 72.17 | 91.50 |
| mRHI 0 DS | 46.94 | 89.43 |
| mRHI 11 DS | 50.31 | 89.38 |
| mRHI 13 DS | 53.18 | 90.67 |
| mRHI 14 DS | 54.69 | 87.83 |

Furthermore, preliminary experiments shown that the compositions mRHI 17 to mRHI 20 was effective in improved drought stress in corn plants (data not shown).

### Example 4: Drought stress in Lettuce

The effect of the composition of present invention drought stress tolerance in lettuce was examined expressed in fresh biomass (FB) (Table 12), by treatment with and without the composition of present invention.

**Table 11. Dosage/plant**

| Treatment | Dosage (g/plant) |
|---|---|
| | |
| UTC FW | - |
| mRHi 0 FW | 0,5625 |
| UTC DS | |
| mRHI 0_DS | 0,5625 |
| mRHI 5 | 0,6340 |
| mRHI 6 | 0,6250 |
| mRHI 13 | 0,6340 |
| mRHI 14 | 0,6250 |

One single plant was planted in each 3-literfilled with LS73 substrate (70% sand and 30% soil). Plants were treated with the composition of present invention, by applying the amount of product reported in Table 11 at the root. Drought stress was introduced by reducing the water availability for 40% compared to the full water, the positive control. All tested compositions of present invention improve drought tolerance in lettuce (see table 12).

**Table 12. Fresh biomass in Lettuce**

| **Treatment** | **FB (g)** |
|---|---|
| UTC FW | 114.86 |
| mRHI 0 FW | 115.42 |
| UTC DS | 42.69 |
| mRHI 0 DS | 43.54 |
| mRHI 5 | 47.27 |
| mRHI 6 | 46.39 |
| mRHI 13 | 48.69 |
| mRHI 14 | 45.04 |

Furthermore, preliminary experiments shown that the compositions mRHI 17 to mRHI 20 was effective in improved drought stress in lettuce (data not shown).

### Example 5: Improved tomato growth plants under different potting soil substrates

Tomato seeds were sown in peat moss enriched in nutrients (1 g Nitrogen/L of substrate). The seedlings were grown to a 3 to 4 leaf's stage before transplantation to 3L pots. Plants were treated with the composition of present invention, by applying the amount of product reported on Table 13 under the roots of the plants.

**Table 13. Dosage/pot**

| Treatment | Substrate | dosage (g/pot) |
|---|---|---|
| UTC | A | - |
| mRHI 0 | A | 1,400 |
| mRHI 0 (2x) | A | 2,800 |
| mRHI 13 | A | 1,578 |
| mRHI 6 (2x) | A | 3,111 |
| UTC | B | - |
| mRHI 0 | B | 1,400 |
| mRHI 0 (2x) | B | 2,800 |
| mRHI 5 | B | 1,578 |
| mRHI 13 | B | 1,578 |
| mRHI 5 (2x) | B | 3,156 |
| mRHI 6 (2x) | B | 3,111 |
| mRHI 14 (2x) | B | 3,111 |

Multiple embodiments of present invention were tested on tomato plants, see table 13. The controls in this experiment included plants that did not receive any composition, the UTC (untreated control), and plants treated with solely the carrier, without the so defined plant extract. The effect of composition of the present invention was assessed on two potting soils, type A (terriccio Naturasol-compo consumer) and type B (terriccio COMPOSANA-compo consumer) (Table 13).

**Table 14. Fresh biomass and fruits yield**

| Treatment | Potting soil type | % Yield increase norm to UTC | | Fresh biomass shoot (g) |
|---|---|---|---|---|
| UTC DS | A | 0% | 78.16 | |
| mRHI 0 DS | A | -18% | 65.33 | |
| mRHI 0 DS 2x | A | -9% | 89.80 | |
| mRHI 13 DS | A | 30% | 104.40 | |
| mRHI 6 DS 2x | A | 10% | 103.38 | |
| UTC DS | B | 0% | 101.60 | |
| mRHI 0 DS | B | 10% | 102.19 | |
| mRHI 0 DS 2x | B | 59% | 95.40 | |
| mRHI 5 DS | B | 99% | 78.58 | |
| mRHI 13 DS | B | 86% | 92.58 | |
| mRHI 5 DS 2x | B | 48% | 120.10 | |
| mRHI 6 DS 2x | B | 133% | 118.36 | |
| mRHI 14 DS 2x | B | 164% | 120.91 | |

mRHI 6 and 13 increases signficantly the fresh biomass of tomato on both soil types, with an increase in yield for soiling type B 133% and 86% for mRHI 6 and 13 respectively, compared to the untreated control under drought stress. In soil type B an increase in yield of tomato of 164% is reached for mRHI 14.

## Claims

1. A composition for providing drought tolerance in a plant, comprising
30 wt% to 85 wt% of an organic carrier material comprised of organic side stream residuals, said organic side stream residuals comprising a protein content of 5 wt% to 50 wt%;
1 wt% to 30 wt% of a plant tissue, wherein the plant tissue is one or more selected from the group consisting of *Vitis vinifera, Opuntia ficus indica, Ribes nigrum, Medicago sativa, Salvia Rosmarinus, Eucalyptus spp., Lentiscus pistacia, Castanea spp., Thymbra capitata, Thymus spp., Salix spp., Sinapis spp., Humulus lupulus* and *Zingiber officinale* preferably *Vitis vinifera, Ribes nigrum* and/or *Opuntia ficus indica*;
wherein the composition is comprised of microgranules having a particle size of between 0.1 mm to 3 mm in diameter.

2. The composition according claim 1, wherein said composition further comprises 5 wt% to 40 wt% of a wetting agent and/or a superabsorbent, preferably wherein the superabsorbent is selected from the group consisting of corn starch, Idrovgea, Evonik, Swellgel, and zeolite, preferably corn starch, and/or,
wherein the wetting agent is selected from the group consisting of PBS, Acquaid, Symbio incision, Hydroaid plus, Hydravance 200 and Symbio Yucca schidigera, preferably PBS.

3. The composition according to claim 1 or 2, wherein said composition further comprises 0.1 wt% to 10 wt% of a bio-stimulant, preferably wherein the bio-stimulant is one or more selected from the group consisting of Plant Growth Promoting Microorganism (PGPM), polyphenol, 5-ALA, plant extract, sildenafil citrate and melatonin, preferably PGPM and/or polyphenol..

4. The composition according to any one of the claims 1 to 3, wherein the Plant Growth Promoting Microorganism is selected from the group consisting of *Acinetobacter spp.,* preferably *Acinetobacter rhizosphaerae, Pseudomonas spp.,* preferably *Pseudomonas putida, Bacillus spp.,* preferably *Bacillus megaterium* or *Bacillus simplex, Chryseobacterium spp., Trichoderma spp Pantoea spp., Methylobacterium ssp., Azotobacter spp., Azospirillum spp., Streptomyces spp., Rhizobium spp., Burkholderia sp, Glomus spp.* and *Lactobacillus spp.,* preferably *Acinetobacter rhizosphaerae., Pseudomonas putida, Bacillus megaterium* and/or *Bacillus simplex.*

5. The composition according to any one of the claims 1 to 4, wherein the polyphenol is selected from the group consisting of pro-anthocyanidines, tannin, catechin, epicatechin, flavonoids, betalains and anthocyanins.

6. The composition according to any one of the claims 1 to 5, wherein the plant tissue is from a plant part selected from the group consisting of leaf, root, seed and flower, preferably seed, and/or
wherein the organic side stream residuals originate from legumes, oilseed meals, dry seeds and/or cereals,
preferably wherein the legumes originate from one or more plant(s) selected from the group consisting of *Glycine max, Lens spp., Cicer arietinum, Phaseolus spp., Pisum sativum, Vicia faba, Arachis hypogaea* and *Lupinus spp.,* more preferably *Glycine max, Lens spp.* and/or *Cicer arietinum,*
preferably wherein the oilseed meals and/or dry seeds originate from one or more plant(s) selected from the group consisting of *Brassica* spp., preferably *Brassica napus, Helianthus annuus, Glycine max* and *Gossypium* spp., more preferably *Brassica napus* and/or *Helianthus annuus..*

7. The composition according to any one of the claims 1 to 6, wherein the cereals originate from one or more plant(s) selected from the group consisting of *Triticum* spp., *Zea mays, Avena sativa, Oryza sativa, Hordeum vulgare, Secale cereale, Panicodae, Chenopodium quinoa* and *Sorghum bicolor,* preferably *Triticum* spp., *Zea mays* and *Avena sativa.*

8. The composition according to any one of the claims 1 to 7, wherein the composition is free of fertilizer composition.

9. A method for improving sub-comfort conditions of a plant, wherein the method comprises the step of applying a composition according to any one of the claims 1 to 8 to a root of the plant or to soil above said root, preferably wherein the composition is applied during sowing, transplanting or during plant cultivation.

10. The method according to claim 9, wherein the plant is a seed, a sprout or a youngling, and/or wherein the plant is one or more agricultural crop selected from the group consisting of tomato, wheat, corn, sorghum, lettuce, forage, marigold, preferably tomato and/or wheat.

11. The method according to claim 9 or 10, wherein the composition is applied between 10 kg/ha to 80 kg/ha, preferably between 20 kg/ha to 70 kg/ha, more preferably 30 kg/ha to 60 kg/ha, most preferably between 40 kg/ha to 50 kg/ha, and/or wherein the composition is applied to the plant at least one time per life cycle, preferably at least two times per life cycle, more preferably at least three times per life cycle of the plant..

12. The method according to any one of the claims 9 to 11, wherein said sub-comfort conditions are one or more selected from the group consisting of drought stress, plant nutrient deficiencies, nitrogen shortage, phosphorus shortage and salinity, preferably drought stress.

13. A method for preparation of a plant tissue for use in a composition according to any one of the claims 1 to 8, comprising the steps of
a) selecting the plant tissue from a plant part highest in concentration in one or more polyphenols, wherein the plant is one or more selected from the group consisting of *Vitis vinifera, Opuntia ficus indica, Ribes nigrum, Medicago sativa, Salvia Rosmarinus, Eucalyptus spp., Lentiscus pistacia, Castanea spp., Thymbra capitata, Thymus spp., Salix spp., Sinapis spp., Humulus lupulus* and *Zingiber officinale* preferably *Vitis vinifera, Ribes nigrum* and *Opuntia ficus indica;*
b) cutting the plant tissue in sections between 0.5 to 5 cm²;
c) drying the plant tissue at room temperature in an atmosphere with high nitrogen and low oxygen, between 78% to 99% nitrogen and between 1% to 21% oxygen;
d) sterilizing the plant tissue, preferably wherein sterilization of plant tissue is performed by LED-UV radiation or ozone fumigation;
e) obtainment of the plant tissue for use in the composition, preferably wherein the plant parts are seeds and/or leaves, and/or,
wherein the one or more polyphenols is selected from the group consisting of pro-anthocyanidines, tannin, catechin, epicatechin, flavonoids, betalains and anthocyanins.

14. The method according to claims 13, wherein the method alternatively comprises the step of providing a plant extract, wherein the plant tissue of step c is contacted with a solvent, wherein the solvent is water, an alcohol or an acetone.

15. Use of composition according to claims 1 to 8 for increasing the drought tolerance of a plant.
